# EUROPEAN PATENT APPLICATION

(11) **EP 4 071 107 A1**
(43) Date of publication of application: **12.10.2022**
(21) Application number: 21167238.1
(22) Date of filing: 07.04.2021
(51) Int. Cl.: C01B 13/02, A62B 21/00

(54) **COMPOSITION AND METHOD FOR GENERATING OXYGEN**

(71) Applicant: Diehl Aviation Gilching GmbH, 82205 Gilching (DE); Technische Universität München, 80333 München (DE)
(72) Inventor: Kallfaß, Christoph, 74523 Schwäbisch Hall (DE); Imhof, Alexander, 81543 München (DE); Kühn, Fritz, 85748 Garching (DE)
(74) Representative: Diehl Patentabteilung

(57) **Abstract**

The invention concerns a composition for generating oxygen which composition comprises or consists of an oxygen source and an ionic liquid, wherein the oxygen source is an alkali metal peroxide, an alkaline-earth metal peroxide, an alkali metal chlorate, an alkali metal perchlorate, an alkaline-earth metal perchlorate or a mixture of at least two of an alkali metal peroxide, an alkaline-earth metal peroxide, an alkali metal chlorate, an alkali metal perchlorate and an alkaline-earth metal perchlorate, wherein the ionic liquid consists of at least one cation and at least one anion and is an ionic liquid which is in liquid state, wherein the ionic liquid is a Brønsted acidic ionic liquid.

## Description

The present invention relates to a composition, a kit and a method for generating breathable oxygen. The composition comprises or consists of at least one oxygen source and at least one ionic liquid comprising or consisting of a cation and an anion.

Humans cannot exist without oxygen. In many environments, however, oxygen supply is insufficient or there is a risk of emergency situations involving a shortage of oxygen. In order to generate breathable oxygen, different types of chemical oxygen generators can be used. One type of such a chemical oxygen generator uses peroxides as oxygen source, for example sodium percarbonate, sodium perborate, or an urea adduct of hydrogen peroxide. Decomposition of the peroxides yields oxygen, and the decomposition reaction can be started by contacting the peroxide compounds with an appropriate enzyme or transition metal catalyst. Chemical oxygen generators of this type are disclosed in US 2 035 896 A, WO 86/02063 A1, JP S61227903 A, and DE 196 02 149 A1.

From EP 3 323 782 A1, ionic liquids used as solvent in an oxygen-generating composition are known. The composition comprises at least one oxygen source, at least one ionic liquid, and at least one metal oxide compound, wherein the oxygen source comprises a peroxide compound, the ionic liquid is in the liquid state at least in a temperature range from -10°C to +50°C. The metal oxide compound is an oxide of one single metal or of two or more different metals, said metal(s) being selected from the metals of groups 2 to 14 of the periodic table of elements.

EP 3 323 470 A1 discloses a device for generating oxygen comprising at least one reaction chamber for housing a composition for generating oxygen. This composition comprises a peroxide compound as oxygen source formulation and an ionic liquid formulation comprising an ionic liquid having a cation and a metallate anion. Furthermore, the device comprises means for physically separating and means for establishing physical contact of the oxygen source formulation and the ionic liquid formulation as well as means for allowing oxygen to exit the reaction chamber.

EP 3 604 212 B1 discloses an oxygen generator comprising a composition for generating oxygen, the composition comprising an oxygen source, a peroxide decomposition catalyst, an ionic liquid and, if the ionic liquid is acidic, a basic compound, and at least one tuner compact. The tuner compact has a core shell structure comprising a core and one or more shell layers, wherein a first shell layer completely surrounds the core and each further shell layer completely surrounds the underlying shell layer. At least one of the core and the one or more shell layers consists of or comprises a compound selected from a peroxide decomposition catalyst, an acidic compound or a basic compound, with mixtures comprising both an acidic compound and a basic compound or comprising both an acidic compound and a peroxide decomposition catalyst within the core or within the same shell layer being excluded. The core and the one or more shell layers are capable of decomposing or dissolving or disintegrating upon contact with the composition for generating oxygen. The oxygen source comprises a peroxide compound. The ionic liquid is in the liquid state at least in the temperature range from -10°C to +50°C. The peroxide decomposition catalyst is a metal oxide compound and/or a metal salt, wherein the metal oxide compound is an oxide of a single metal or of two or more different metals. The metal(s) is/are selected from the metals of groups 2 to 14 of the periodic table of the elements. The metal salt comprises one single metal or two or more different metals, and an organic and/or an inorganic anion. The document further discloses a method for tuning the oxygen production rate of the composition for generating oxygen by contacting the composition with a tuner compact comprising an acidic or a basic compound. Contacting the composition with an acidic compound results in a deceleration or stop of the oxygen production.

The problem to be solved by the present invention is to provide an alternative composition and a device for generating oxygen. Furthermore, a method and a use for generating oxygen shall be provided.

The problem is solved by the features of claims 1, 10, 13 and 18. Embodiments are subject-matter of claims 2 to 9, 11, 12 and 14 to 17.

The invention concerns a composition for generating oxygen which composition comprises or consists of an oxygen source and an ionic liquid. The oxygen may be breathable oxygen, in particular for emergency use. This means that, e.g. compositions that can generate oxygen only in trace amounts or in combination with other gases resulting in a non-breathable gas mixture are not considered as compositions for generating breathable oxygen. The oxygen source is an alkali metal peroxide, an alkaline-earth metal peroxide, an alkali metal chlorate, an alkali metal perchlorate, an alkaline-earth metal perchlorate or a mixture of at least two of an alkali metal peroxide, an alkaline-earth metal peroxide, an alkali metal chlorate, an alkali metal perchlorate and an alkaline-earth metal perchlorate. The alkali metal peroxide may be Li₂O₂, Na₂O₂ or K₂O₂. The alkaline-earth metal peroxide may be CaO₂. The alkali metal chlorate may be LiClO₃, NaClO₃ or KClO₃. The alkali metal perchlorate may be LiClO₄, KClO₄ or NaClO₄. The alkaline-earth metal perchlorate may be Mg(ClO₄)₂. These oxygen sources have been found to be particularly stable and to be decomposed relative efficiently in the composition without frothing or decomposing explosively.

The ionic liquid is an ionic liquid which is in liquid state, wherein the ionic liquid is a Brønsted acidic ionic liquid (BAIL). The ionic liquid may be an ionic liquid which is in liquid state in a temperature range from -20 °C to +200 °C, particularly in a temperature range from -15 °C to +150 °C, particularly in a temperature range from -10 °C to +50 °C. In the context of this invention, a BAIL is regarded as an acidic ionic liquid in which one of the ions forming the ionic liquid is able to provide a proton to a molecule which is able to accept this proton. In the context of this invention, an ionic liquid is regarded to be acidic, if its intrinsic pH value is below 6.5, more particularly below 5.5, more particularly below 4.5, more particularly below 3.5, more particularly below 2.5, wherein the intrinsic pH value of the ionic liquid is determined in an aqueous solution of the ionic liquid at 20 °C. The aqueous solution is prepared by adding the ionic liquid to distilled water such that the concentration of the ionic liquid in the aqueous solution is 100 mM. The pH value of the aqueous solution may be determined using usual methods, e. g. by using a pH meter.

Surprisingly, the inventors found that the composition according to the present invention is able to generate oxygen and in particular breathable oxygen though lacking a catalyst in the form a metal oxide, a metal salt, metal cation or metallate anion. This is particularly surprising in view of EP 3 604 212 B1 according to which contacting the composition for generating oxygen with an acidic compound results in a deceleration or even stopping of oxygen production. Furthermore, inventors surprisingly found that even alkali metal perchlorates which can usually only hardly be decomposed decompose in the presence of a Brønsted acidic ionic liquid. A further important effect of the composition according to the invention is that decomposition of the oxygen source resulting from contact with the Brønsted acidic ionic liquid does not result in such high reaction temperatures as decomposition in the presence of metal oxide catalysts. For example, thermal decomposition of sodium chlorate driven by the presence of the catalyst cobalt oxide usually results in reaction temperatures above 300 °C. In contrast to this, decomposition of the oxygen source resulting from contact with the a Brønsted acidic ionic liquid in the composition according to the invention results in reaction temperatures that usually remain below 150°C. In general, the resulting reaction temperature is in a range of 130 °C to 150 °C. The mentioned reaction temperatures are temperatures which are achieved by self-adjustment during reaction without additionally heating or cooling the composition during reaction.

Though the chemical mechanism of action of oxygen generation in the composition according to the invention is unclear, the inventors assume that the BAIL provides a catalytic effect in the composition according to the invention and therefore serves as a solvent as well as a catalyst.

The ionic liquid in the composition according to the invention consists of at least one cation, i. e. species of cations, and at least one anion, i. e. species of anions. It is not just a solution of a salt in a solvent such as water but it is in liquid state as a salt. The cation may be a N-monosubstituted or N'-N-disubstituted imidazolium ion, a 2-hydroxyethan-1-aminium ion or a pentylammonium ion. The anion may be a dihydrogen phosphate ion, a hydrogen sulfate ion or a nitrate ion. The absence of substituents and/or metal ligands in the anions increases the acidity of the anions and improves the decomposition of the oxygen source.

In an embodiment of the invention, a substituent of the N-monosubstituted and at least one substituent of the N'-N-disubstituted imidazolium ion is independently selected from methyl, ethyl or sulfobutyl. These functional groups increase the acidity of the cations and improve the decomposition of the oxygen source.

Examples of BAILs are as follows: 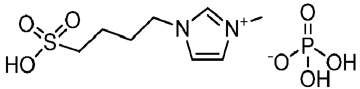 3-methyl-1-(4-sulfobutyl)-1H-imidazol-3-ium dihydrogen phosphate [SO₃HBMIM][H₂PO₄], 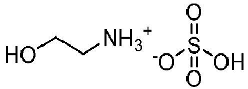 2-hydroxyethan-1-aminium hydrogen sulfate [HOENHHH][HSO₄], 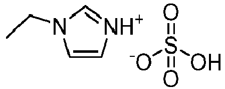 1-ethyl-1H-imidazol-3-ium hydrogen sulfate [EHIM][HSO₄] and 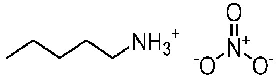 pentylammonium nitrate [PNHHH][NO₃].

According to an embodiment of the invention, the composition comprises no metal containing catalyst, i. e. a metal containing catalyst is excluded from the components of the composition. The excluded metal containing catalyst may be for example a catalyst in the form of a metal oxide, a metal salt, metal cation or metallate anion. However, if this condition does not apply and the composition comprises a metal containing catalyst, this catalyst may be restricted to a metal oxide or a metal cation, wherein the metal of the metal oxide or the metal cation is lead or a transition metal. The transition metal can be manganese, copper, cobalt or iron.

The metal oxide may be lead(II) oxide, lead(IV) oxide, lead (II,IV) oxide, manganese(II) oxide, manganese(III) oxide, manganese(II,III) oxide, manganese(IV) oxide, copper(I) oxide, copper(II) oxide, cobalt(II) oxide, cobalt(III) oxide, c0balt(II,III) oxide, iron(II) oxide, iron(II,III) oxide or iron(III) oxide, in particular manganese(IV) oxide. The metal cation may be Pb(II), Pb(IV), Mn(II), Mn(III), Mn(IV), Cu(I), Cu(II), Co(II), Co(III), Fe(II) or Fe(III), in particular Pb(IV). These metal oxides and metal cations have been shown to accelerate the oxygen production in the composition according to the invention. The metal oxide or the metal cation may be a metal oxide or a metal cation formed, at least partly, during reaction of the composition. For example, if the metal oxide is manganese(III) oxide then manganese(IV) oxide can be formed by oxidation by the oxygen formed during reaction of the composition.

In an embodiment of the invention, the composition comprises at least one additive. The additive may be independently selected from water, an acid or a basic aqueous solution. The basic aqueous solution may be a solution of a hydroxide, such as sodium hydroxide, potassium hydroxide, and calcium hydroxide, or a solution of a basic salt, such as potassium phosphate, sodium acetate, sodium percarbonate, potassium carbonate. The acid may be an inorganic acid such as HCI or H₂SO₄ or an organic acid such as succinic acid, citric acid, or benzoic acid. The acid may be the acid as such or an acidic aqueous solution of the acid.

If more than one additive is comprised by the composition, the acid and the basic aqueous solution are usually not combined as additives. However, since the acid can be used as additive for decelerating oxygen generation whereas the basic aqueous solution can be used as additive for accelerating oxygen generation both additives can be present as additive in the composition in a form that result in deferred release of one of the additives or in subsequent release of the additives. For example, at least one of the additives may be encapsulated in a capsule slowly dissolving when coming into contact with the ionic liquid. Water as additive reduces reactivity of the composition according to the invention and reduces the reaction temperature achieved during generation of oxygen from the composition according to the invention. A reduction of the reaction temperature can also be achieved by the acid as additive owing to its decelerating effect on the oxygen generating reaction.

The acid may be sulfuric acid or hydrochloric acid, in particular sulfuric acid, and the basic aqueous solution may be an aqueous solution of potassium hydroxide or sodium hydroxide.

The oxygen source and the ionic liquid of the composition according to the invention may be comprised by a kit. In an embodiment the kit can consist of this oxygen source and this ionic liquid. The kit may further comprise any further constituent forming the composition according to the invention. The further constituents may be the metal oxide or the metal cation or at least one additive of the composition according to the invention.

The invention further concerns a device for generating oxygen, in particular breathable oxygen, in particular for emergency use such as in an emergency rescue system. The device contains the oxygen source and the ionic liquid of the composition according to the invention in separate compartments. The device comprises a physical barrier separating the compartments and means for overcoming the physical barrier such that the oxygen source and the ionic liquid are brought into contact with each other. The physical barrier may be a valve to be opened by the means such that the ionic liquid can flow to the oxygen source or an impermeable barrier, such as a membrane or a foil, wherein the oxygen source and the ionic liquid are brought into contact with each other by removing, destroying or making permeable the impermeable barrier by the means. The foil may be a plastic foil or a metal foil. The means may be a blade for cutting a hole into the membrane or foil.

In an embodiment of the invention, the device further comprises any further constituents forming the composition according to the invention. The further constituent may be the metal oxide or the metal cation or at least one additive of the composition according to the invention. The further constituent may be provided in a further compartment or together with the ionic liquid. It may be dissolved or suspended in the ionic liquid or mixed with the ionic liquid.

The invention further concerns a method for generating oxygen, in particular breathable oxygen, in particular for emergency use such as in an emergency rescue system. The method comprises the steps of providing the oxygen source and the ionic liquid of the composition according to the invention and bringing into contact the oxygen source and the ionic liquid with each other. In an embodiment of the method, any further constituent forming the composition according to the invention is provided and brought into contact with the oxygen source and the ionic liquid of the composition according to the invention.

According to an embodiment of the method according to the invention, the oxygen source is provided in a first compartment and the ionic liquid is provided in a second compartment. The first compartment and the second compartment are separated by a physical barrier, wherein generation of oxygen is started by overcoming the physical barrier such that the oxygen source and the ionic liquid are brought into contact with each other. The physical barrier may be a valve, wherein the oxygen source and the ionic liquid are brought into contact with each other by opening the valve such that the ionic liquid can flow to the oxygen source. Alternatively, the physical barrier may be an impermeable barrier, in particular a membrane or a foil, wherein the oxygen source and the ionic liquid are brought into contact with each other by removing, destroying or making permeable the impermeable barrier.

Any of the further constituents forming the composition according to the invention may be provided in a third compartment separated from the first compartment and the second compartment by a further physical barrier and brought into contact with the oxygen source and the ionic liquid by overcoming the further physical barrier, in particular by removing, destroying or making permeable the further physical barrier. Alternatively, any of the further constituents forming the composition according to the invention may be provided in the second compartment together with the ionic liquid. The further constituent(s) may be dissolved or suspended in the ionic liquid or mixed with the ionic liquid in case the further constituent(s) is/are in liquid state such as the additive.

Furthermore, the invention concerns a use of the oxygen source and the ionic liquid of the composition according to the invention and optionally of any further constituent of the composition according to the invention for generating oxygen, in particular breathable oxygen, in particular for emergency use such as in an emergency rescue system. The use according to the invention may be a use in a hermetically sealed environment such as a submarine or a space capsule, or in an emergency situation such as in case of a sudden pressure drop in an aircraft.

All features given in this description including the embodiments are to be understood as features that can be applied to all forms of the invention. This means, e. g., that a feature given for the device or the composition can also be applied to the method and/or the use according to the invention and vice versa.

The invention is explained in more details in the following embodiments:

### Example 1

300 g of sodium peroxide were added in each case to 100 ml of 3-methyl-1-(4-sulfobutyl)-1H-imidazol-3-ium dihydrogen phosphate [SO₃HBMIM][H₂PO₄], 2-hydroxyethan-1-aminium hydrogen sulfate [HOENHHH][HSO₄], 1-ethyl-1H-imidazol-3-ium hydrogen sulfate [EHIM][HSO₄] and pentylammonium nitrate [PNHHH][NO₃] contained in each case in a separate glass flask. The flask was closed in each case and the oxygen released by the decomposition reaction was led out of the flasks through a drum gas meter for measuring the volume of generated oxygen. In addition, the reaction temperature of each reaction was measured. All the reactions resulted in a volume of about 43 liter breathable oxygen. The reaction temperatures increased over time, but remained below 150°C in all cases.

Furthermore, inventors found that the addition of MnO₂ (= manganese(IV) oxide) or lead(IV) acetate, which provides Pb(IV) ions, accelerates the oxygen production.

Additionally, they found that the addition of water, of H₂SO₄ or of an aqueous sulfuric acid solution decreases and addition of a sodium hydroxide solution increases the oxygen flow rate of the reaction.

### Example 2

300 g of lithium chlorate were added in each case to 100 ml of 3-methyl-1-(4-sulfobutyl)-1H-imidazol-3-ium dihydrogen phosphate [SO₃HBMIM][H₂PO₄], 2-hydroxyethan-1-aminium hydrogen sulfate [HOENHHH][HSO₄], 1-ethyl-1H-imidazol-3-ium hydrogen sulfate [EHIM][HSO₄] and pentylammonium nitrate [PNHHH][NO₃] contained in each case in a separate glass flask. The flask was closed in each case and the oxygen released by the decomposition reaction was led out of the flasks through a drum gas meter for measuring the volume of generated oxygen. In addition, the reaction temperature of each reaction was measured. All the reactions resulted in a volume of about 111 liter breathable oxygen. The reaction temperatures increased over time, but remained below 150°C in all cases.

As in the case of sodium peroxide the reaction with lithium chlorate could be accelerated by addition of MnO₂ and lead(IV) acetate. Also, the addition of water, of H₂SO₄ or of an aqueous sulfuric acid solution decreased and addition of a sodium hydroxide solution increased the oxygen flow rate of the reaction.

### Example 3

300 g of lithium perchlorate were added in each case to 100 ml of 3-methyl-1-(4-sulfobutyl)-1H-imidazol-3-ium dihydrogen phosphate [SO₃HBMIM][H₂PO₄], 2-hydroxyethan-1-aminium hydrogen sulfate [HOENHHH][HSO₄], 1-ethyl-1H-imidazol-3-ium hydrogen sulfate [EHIM][HSO₄] and pentylammonium nitrate [PNHHH][NO₃] contained in each case in a separate glass flask. The flask was closed in each case and the oxygen released by the decomposition reaction was led out of the flasks through a drum gas meter for measuring the volume of generated oxygen. In addition, the reaction temperature of each reaction was measured. All the reactions resulted in a volume of about 126 liter breathable oxygen. The reaction temperatures increased over time, but remained below 150°C in all cases.

As in the case of sodium peroxide the reaction with lithium chlorate could be accelerated by addition of MnO₂ and lead(IV) acetate. Also, the addition of water, of H₂SO₄ or of an aqueous sulfuric acid solution decreased and addition of a sodium hydroxide solution increased the oxygen flow rate of the reaction.

### Example 4

300 g of calcium peroxide were added in each case to 100 ml of 3-methyl-1-(4-sulfobutyl)-1H-imidazol-3-ium dihydrogen phosphate [SO3HBMIM][H2PO₄], 2-hydroxyethan-1-aminium hydrogen sulfate [HOENHHH][HSO₄], 1-ethyl-1H-imidazol-3-ium hydrogen sulfate [EHIM][HS04] and pentylammonium nitrate [PNHHH][NO₃] contained in each case in a separate glass flask. Generation of breathable oxygen was observed in all cases. However, in none of the cases the volume of generated oxygen was measured.

## Claims

1. A composition for generating oxygen which composition comprises or consists of an oxygen source and an ionic liquid, wherein the oxygen source is an alkali metal peroxide, an alkaline-earth metal peroxide, an alkali metal chlorate, an alkali metal perchlorate, an alkaline-earth metal perchlorate or a mixture of at least two of an alkali metal peroxide, an alkaline-earth metal peroxide, an alkali metal chlorate, an alkali metal perchlorate and an alkaline-earth metal perchlorate, wherein the ionic liquid consists of at least one cation and at least one anion and is an ionic liquid which is in liquid state, wherein the ionic liquid is a Brønsted acidic ionic liquid.

2. The composition according to claim 1, wherein the ionic liquid is an ionic liquid, which is in liquid state in a temperature range from -20 °C to +200 °C, particularly in a temperature range from -15 °C to +150 °C.

3. The composition according to claim 1 or 2, wherein the cation is an N-monosubstituted or N'-N-disubstituted imidazolium ion, a 2-hydroxyethan-1-aminium ion or a pentylammonium ion and/or the anion is a hydrogen phosphate ion, a hydrogen sulfate ion or a nitrate ion.

4. The composition according to claim 3, wherein a substituent of the N-monosubstituted and at least one substituent of the N'-N-disubstituted imidazolium ion is independently selected from methyl, ethyl or sulfobutyl.

5. The composition according to any of the preceding claims, wherein the oxygen source is Li₂O₂, Na₂O₂, K₂O₂, CaO₂, LiClO₃, NaClO₃, KClO₃, LiClO₄, KClO₄, NaClO₄ or Mg(ClOa)₂.

6. The composition according to any of the preceding claims, wherein no metal containing catalyst is comprised by the composition or wherein the composition comprises a metal oxide or a metal cation, wherein the metal is lead or a transition metal.

7. The composition according to claim 6, wherein the transition metal is manganese, copper, cobalt or iron.

8. The composition according to any of the preceding claims, wherein the composition comprises at least one additive, wherein the additive is independently selected from water, an acid or a basic aqueous solution.

9. The composition according to claim 8, wherein the acid is an inorganic acid, in particular sulfuric acid or hydrochloric acid, or an organic acid, in particular succinic acid, citric acid or benzoic acid, and the basic aqueous solution is an aqueous potassium hydroxide solution or an aqueous sodium hydroxide solution.

10. A device for generating oxygen comprising the oxygen source and the ionic liquid forming the composition according to claim 1 in separate compartments, wherein the device comprises a physical barrier separating the compartments and also means for overcoming the physical barrier such that the oxygen source and the ionic liquid are coming into contact with each other.

11. The device according to claim 10, wherein the physical barrier is a valve to be opened by the means such that the ionic liquid can flow to the oxygen source or wherein the physical barrier is an impermeable barrier, in particular a membrane or a foil, wherein the oxygen source and the ionic liquid are coming into contact with each other by removing, destroying or making permeable the impermeable barrier by the means.

12. The device according to claim 10 or 11, wherein the device further comprises any further constituent forming the composition according to any of claims 2 to 9.

13. A method for generating oxygen comprising the steps of providing the oxygen source and the ionic liquid forming the composition according to claim 1 and bringing into contact the oxygen source and the ionic liquid with each other.

14. The method according to claim 13, wherein any further constituent forming the composition according to any of claims 2 to 9 is provided and brought into contact with the oxygen source and the ionic liquid forming the composition according to claim 1.

15. The method according to claim 13 or 14, wherein the oxygen source is provided in a first compartment and the ionic liquid is provided in a second compartment, wherein the first compartment and the second compartment are separated by a physical barrier, wherein generation of oxygen is started by overcoming the physical barrier such that the oxygen source and the ionic liquid are brought into contact with each other.

16. The method according to claim 15, wherein the physical barrier is a valve, wherein the oxygen source and the ionic liquid are brought into contact with each other by opening the valve such that the ionic liquid can flow to the oxygen source or wherein the physical barrier is an impermeable barrier, in particular a membrane or a foil, wherein the oxygen source and the ionic liquid are brought into contact with each other by removing, destroying or making permeable the impermeable barrier.

17. The method according to claim 15 or 16, wherein any of the further constituents forming the composition according to any of claims 2 to 9 is provided in a third compartment separated from the first compartment and the second compartment by a further physical barrier and brought into contact with the oxygen source and the ionic liquid by overcoming the further physical barrier, in particular by removing, destroying or making permeable the further physical barrier or wherein any of the further constituents forming the composition according to any of claims 2 to 9 is provided in the second compartment together with the ionic liquid.

18. Use of the oxygen source and the ionic liquid forming the composition according to claim 1 and optionally of any further constituent forming the composition according to any of claims 2 to 9 for generating oxygen.
